# EUROPEAN PATENT APPLICATION

(11) **EP 4 660 983 A1**
(43) Date of publication of application: **10.12.2025**
(21) Application number: 23921011.5
(22) Date of filing: 06.02.2023
(51) Int. Cl.: G08G 1/097

(54) **INFORMATION PROCESSING SYSTEM, INFORMATION PROCESSING DEVICE, INFORMATION PROCESSING METHOD, AND RECORDING MEDIUM**

(71) Applicant: NEC Corporation, Tokyo 108-8001 (JP)
(72) Inventor: SHIBATA, Koyo, Tokyo 108-8001 (JP); INAGAKI, Kazuki, Tokyo 108-8001 (JP); SHIMIZU, Yuta, Tokyo 108-8001 (JP); HIJIKATA, Kohei, Tokyo 108-8001 (JP)
(74) Representative: Vossius & Partner Patentanwälte Rechtsanwälte mbB
(86) International application number: PCT/JP2023/003818
(87) International publication number: WO 2024/166174

(57) **Abstract**

An information processing system (10) comprises: an image acquisition means (110) that acquires a captured image of the interior and/or exterior of a moving body (50); a processing means (130) that executes a plurality of different processes on the basis of the image; and an information acquisition means (120) that acquires moving-body-related information indicating a status pertaining to the moving body. The processing means controls an execution mode pertaining to each of the plurality of processes on the basis of the moving-body-related information. According to such an information processing system, a plurality of processes related to a moving body can be executed appropriately.

## Description

### Technical Field

The present disclosure relates to technical fields of an information processing system, an information processing apparatus, an information processing method, and a recording medium.

### Background Art

There is known a system that performs various types of processing in moving bodies such as vehicles. For example, Patent Literature 1 discloses a technique/technology for determining whether or not to construct an artificial intelligence model based on a state of a vehicle and for identifying the type of objects such as vehicles, bicycles, and pedestrians, by using the artificial intelligence model. Patent Literature 2 discloses a technique/technology for recognizing objects included in images by using a machine learning model. Patent Literature 3 discloses a technique/technology for changing an authentication level according to the risk of unauthorized use at the time of biometric authentication processing.

### Citation List

### Patent Literature

Patent Literature 1: JP2018-190045A
Patent Literature 2: JP2022-524920A
Patent Literature 3: JP2007-145200A

### Summary

### Technical Problem

The present disclosure aims to improve the techniques/technologies disclosed in Citation List.

### Solution to Problem

An information processing system according to an example aspect of the present disclosure includes: an image acquisition unit that acquires a captured image of at least one of an inside or outside of a moving body; a processing unit that performs a plurality of different processing operations, based on the image; and an information acquisition unit that acquires moving-body-related information indicating a state related to the moving body, wherein the processing unit controls an execution aspect related to each of the plurality of processing operations, based on the moving-body-related information.

An information processing apparatus according to an example aspect of the present disclosure is mounted on a moving body, the information processing apparatus including: an image acquisition unit that acquires a captured image of at least one of an inside or outside of the moving body; a processing unit that performs a plurality of different processing operations, based on the image; and an information acquisition unit that acquires moving-body-related information indicating a state related to the moving body, wherein the processing unit controls an execution aspect related to each of the plurality of processing operations, based on the moving-body-related information.

An information processing method according to an example aspect of the present disclosure is an information processing method that is executed by at least one computer, the information processing method including: acquiring a captured image of at least one of an inside or outside of a moving body; performing a plurality of different processing operations, based on the image; and acquiring moving-body-related information indicating a state related to the moving body, wherein an execution aspect related to each of the plurality of processing operations is controlled based on the moving-body-related information.

A recording medium according to an example aspect of the present disclosure is a recording medium on which a computer program that allows at least one computer to execute an information processing method is recorded, the information processing method including: acquiring a captured image of at least one of an inside or outside of a moving body; performing a plurality of different processing operations, based on the image; and acquiring moving-body-related information indicating a state related to the moving body, wherein an execution aspect related to each of the plurality of processing operations is controlled based on the moving-body-related information.

### Brief Description of Drawings

[FIG. 1] FIG. 1 is a block diagram illustrating a hardware configuration of an information processing system according to a first example embodiment.
[FIG. 2] FIG. 2 is a block diagram illustrating a functional configuration of the information processing system according to the first example embodiment.
[FIG. 3] FIG. 3 is a flowchart illustrating a flow of operation of the information processing system according to the first example embodiment.
[FIG. 4] FIG. 4 is a side view illustrating a configuration of a vehicle to which an information processing system according to a second example embodiment is applied.
[FIG. 5] FIG. 5 is a flowchart illustrating a flow of operation of the information processing system according to the second example embodiment.
[FIG. 6] FIG. 6 is a block diagram illustrating a functional configuration of an information processing system according to a third example embodiment.
[FIG. 7] FIG. 7 is a flowchart illustrating a flow of an authentication operation performed in the information processing system according to the third example embodiment.
[FIG. 8] FIG. 8 is a flowchart illustrating a flow of operation of the information processing system according to the third example embodiment.
[FIG. 9] FIG. 9 is a flowchart illustrating a flow of operation of an information processing system according to a fourth example embodiment.
[FIG. 10] FIG. 10 is a flowchart illustrating a flow of operation of an information processing system according to a fifth example embodiment.
[FIG. 11] FIG. 11 is a flowchart illustrating a flow of operation of an information processing system according to a sixth example embodiment.
[FIG. 12] FIG. 12 is a flowchart illustrating a flow of operation of an information processing system according to a seventh example embodiment.
[FIG. 13] FIG. 13 is a flowchart illustrating a flow of operation of an information processing system according to an eighth example embodiment.
[FIG. 14] FIG. 14 is a flowchart illustrating a flow of operation of an information processing system according to a ninth example embodiment.
[FIG. 15] FIG. 15 is a flowchart illustrating a flow of operation of an information processing system according to a tenth example embodiment.
[FIG. 16] FIG. 16 is a flowchart illustrating a flow of operation of an information processing system according to an 11th example embodiment.
[FIG. 17] FIG. 17 is a flowchart illustrating a flow of operation of an information processing system according to a 12th example embodiment.
[FIG. 18] FIG. 18 is a flowchart illustrating a flow of operation of an information processing system according to a 13th example embodiment.
[FIG. 19] FIG. 19 is a block diagram illustrating a configuration of a vehicle equipped with an information processing apparatus according to a 14th example embodiment.

### Description of Example Embodiments

Hereinafter, an information processing system, an information processing apparatus, an information processing method, and a recording medium according to example embodiments will be described with reference to the drawings.

### <First Example Embodiment>

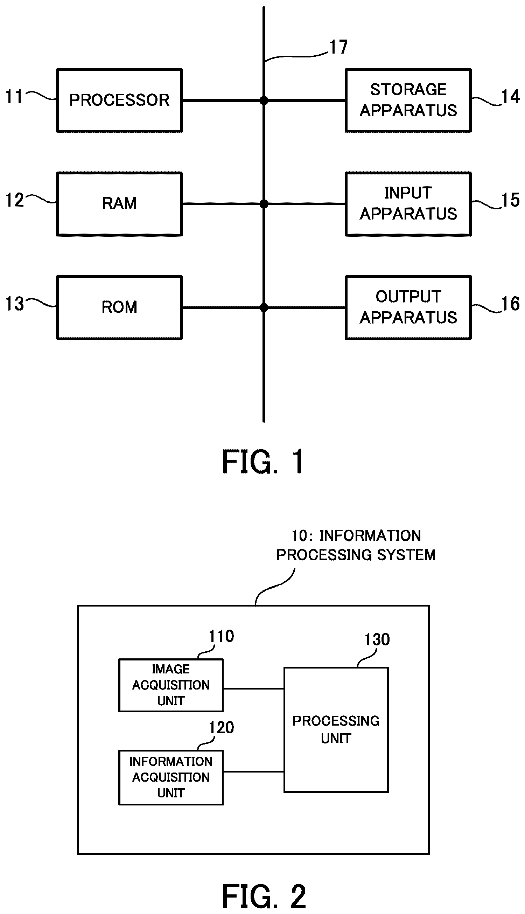

An information processing system according to a first example embodiment will be described with reference to FIG. 1 to FIG. 3.

### (Hardware Configuration)

First, with reference to FIG. 1, a hardware configuration of the information processing system according to the first example embodiment will be described. FIG. 1 is a block diagram illustrating the hardware configuration of the information processing system according to the first example embodiment.

As illustrated in FIG. 1, an information processing system 10 according to the first embodiment includes a processor 11, a RAM (Random Access Memory) 12, and a ROM (Read Only Memory) 13. The information processing system 10 may also include a storage apparatus 14, an input apparatus 15, and an output apparatus 16. The processor 11, the RAM 12, the ROM 13, the storage apparatus 14, the input apparatus 15, and the output apparatus 16, are connected via a data bus 17.

The processor 11 reads a computer program. For example, the processor 11 is configured to read a computer program stored in at least one of the RAM 12, the ROM 13, and the storage apparatus 14. Alternatively, the processor 11 may read a computer program stored on a computer-readable recording medium, by using a not-illustrated recording medium reading apparatus. The processor 11 may also acquire (i.e., may read) a computer program from a not-illustrated apparatus disposed outside the information processing system 10 via a network interface. The processor 11 controls the RAM 12, the storage apparatus 14, the input apparatus 15, and the output apparatus 16 by executing the read computer program. Especially in the present example embodiment, when the processor 11 executes the read computer program, a functional block for executing a plurality of processing operations, based on an image obtained by capturing an inside or outside of a moving body is realized in the processor 11. That is, the processor 11 may function as a controller that exercises each control in the information processing system 10.

The processor 11 may be configured as, for example, a CPU (central processing unit), a GPU (graphics processing unit), a FPGA (field-programmable gate array), a DSP (Digital Signal Processor), an ASIC (Application Specific Integrated Circuit), and a quantum processor. The processor 11 may be one of them, or may use a plurality of them in parallel.

The RAM 12 temporarily stores the computer program to be executed by the processor 11. The RAM 12 temporarily stores data that are temporarily used by the processor 11 when the processor 11 executes the computer program. The RAM 12 may be, for example, a D-RAM (Dynamic Random Access Memory) or a SRAM (Static Random Access Memory). Furthermore, another type of volatile memory may be used in place of the RAM 12.

The ROM 13 stores the computer program to be executed by the processor 11. The ROM 13 may also store other fixed data. The ROM 13 may be, for example, a P-ROM (Programmable Read Only Memory) or an EPROM (Erasable Read Only Memory). In addition, another type of nonvolatile memory may be used in place of the ROM 13.

The storage apparatus 14 stores data that are stored by the information processing system 10 for a long time. The storage apparatus 14 may operate as a transitory storage apparatus of the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing system 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example.

The output apparatus 16 is an apparatus that outputs information about the information processing system 10 to the outside. For example, the output apparatus 16 may be a display apparatus (e.g., a display) that is configured to display the information about the information processing system 10. The output apparatus 16 may also be a speaker or the like that is configured to audio-output the information about the information processing system 10. The output apparatus 16 may be configured as a portable terminal such as a smartphone and a tablet. The output apparatus 16 may also be an apparatus that outputs information in a format other than an image. For example, the output apparatus 16 may be a speaker that audio-outputs the information about the information processing system 10.

A part of the hardware described in FIG. 1 may be provided as an external apparatus of the information processing system 10. For example, the information processing system 10 may include only the processor 11, the RAM 12, and the ROM 13. The other components (i.e., the storage apparatus 14, the input apparatus 15, and the output apparatus 16) may be provided in an external apparatus connected to the information processing system 10. In addition, the information processing system 10 may realize a part of an arithmetic function by using an external apparatus (e.g., an external server or cloud, etc.).

### (Functional Configuration)

Next, with reference to FIG. 2, a functional configuration of the information processing system 10 according to the first example embodiment will be described. FIG. 2 is a block diagram illustrating the functional configuration of the information processing system according to the first example embodiment.

As illustrated in FIG. 2, the information processing system 10 according to the first example embodiment includes, as components for realizing the functions thereof, an image acquisition unit 110, an information acquisition unit 120, and a processing unit 130. Each of the image acquisition unit 110, the information acquisition unit 120, and the processing unit 130 may be a processing block realized by, for example, the processor 11 described above (see FIG. 1).

The image acquisition unit 110 is configured to acquire a captured image of at least one of an inside or outside of a moving body. The moving body here may include various vehicles such as, for example, an automobile, a bicycle, a motorcycle, a bus, and a train. Alternatively, the moving body may include vessels, aircraft, and the like that are not classified as general vehicles. The image acquisition unit 110 may be configured to acquire an image of an inside or outside of a vehicle, which is captured by a camera mounted on the moving body. Specifically, the image acquisition unit 110 may acquire images of a target riding on the moving body and a surrounding area of the moving body, from a camera disposed inside the moving body. Alternatively, the image acquisition unit 110 may acquire an image of the surrounding area of the moving body, from a camera disposed outside the moving body. Furthermore, when a plurality of cameras are mounted on the moving body, the image acquisition unit 110 may be configured to acquire images captured by the respective cameras. The image acquisition unit 110 may be configured to acquire a plurality of images that are continuous in a time series (i.e., a video). The image acquired by the image acquisition unit 110 is configured to be outputted to the processing unit 130.

The information acquisition unit 120 is configured to acquire moving-body-related information. The moving-body-related information may be information indicating a state related to the moving body, may be information indicating a state of the moving body itself, or may be information indicating a state of an occupant of the moving body or a state of a surrounding environment of the moving body, or the like. The moving-body-related information may be information indicating a position, a driving state, and a stopping time of the moving body, or a time when an occupant is away from the moving body, or the like. The moving-body-related information may also be information about an occupant's gender, age, height, weight, clothing, body type, movements, behavioral patterns, or the like. The moving-body-related information may also be information about brightness around the moving body, presence of an obstacle, pedestrian traffic, or the like. The information acquisition unit 120 may acquire the moving-body-related information by using various sensors mounted on the moving body, in-vehicle communication (e.g., CAN standard), GPS (Global Positioning System), beacons, the Internet, Bluetooth, or the like. Additionally, the information acquisition unit 120 may acquire the moving-body-related information from an input (e.g., button operation, etc.) by an occupant of the moving body. The moving-body-related information acquired by the information acquisition unit 120 is configured to be outputted to the processing unit 130.

The processing unit 130 is configured to perform a plurality of different processing operations, based on the image acquired by the image acquisition unit 110. The processing unit 130 may be configured to perform a plurality of processing operations sequentially or to perform a plurality of processing operations simultaneously in parallel. The processing performed by the processing unit 130 is not particularly limited, but may be, for example, processing related to the use of the moving body. The processing unit 130 may be configured to perform processing for releasing a door lock of the moving body, processing for assisting in driving the moving body, and the like. A more specific example of the processing performed by the processing unit 130 will be described in another example embodiment later.

The processing unit 130 is further configured to control an execution aspect of the processing, based on the moving-body-related information acquired by the information acquisition unit 120. For example, the processing unit 130 may performs a plurality of processing operations in an optimal aspect according to the moving-body-related information. Specifically, the processing unit 130 may change the type or number of the processing operations to be performed, based on the moving-body-related information. Alternatively, the processing unit 130 may change the content or order of the processing operations to be performed, based on the moving-body-related information. Alternatively, the processing unit 130 may change whether or not to perform the processing, based on the moving-body-related information. Alternatively, the processing unit 130 may change various thresholds used in the processing operations, based on the moving-body-related information. Alternatively, the processing unit 130 may change the priority of the processing operations, based on the moving-body-related information. Alternatively, the processing unit 130 may change parameters of a device used for the processing. The processing unit 130 may control the execution aspects of all of the plurality of processing operations to be performed, or may control the execution aspect of a part of the processing operations. An example of controlling the execution aspect by the processing unit 130 will be described in more detail in another example embodiment later.

### (Flow of Operation)

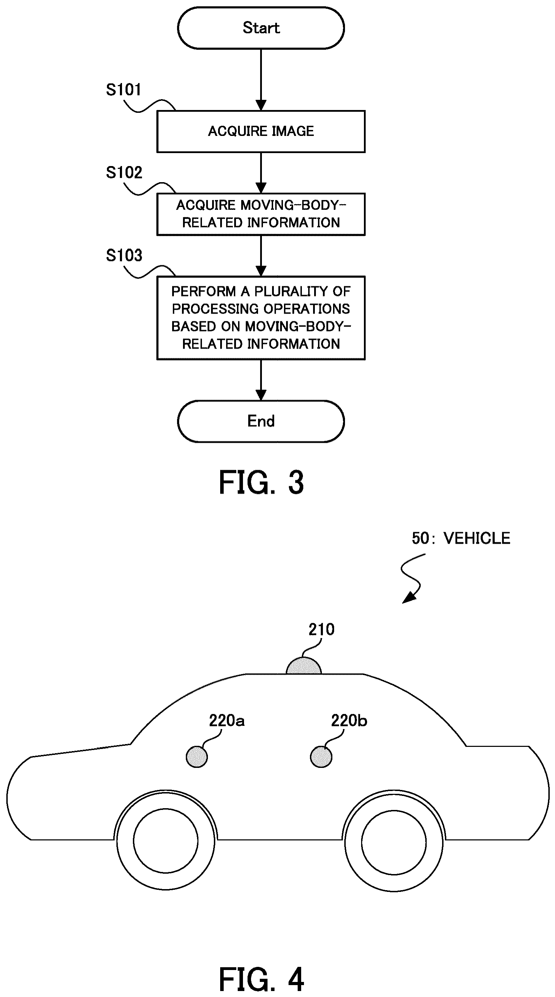

Next, with reference to FIG. 3, a flow of operation of the information processing system 10 according to the first example embodiment will be described. FIG. 3 is a flowchart illustrating the flow of the operation of the information processing system according to the first example embodiment.

As illustrated in FIG. 3, when the operation by the information processing system 10 according to the first example embodiment is started, first, the image acquisition unit 110 acquires the captured image of at least one of the inside or outside of the moving body (step S101). The image acquisition unit 110 outputs the acquired image to the processing unit 130.

Then, the information acquisition unit 120 acquires the moving-body-related information (step S102). Note that the step S102 may be performed in parallel with the step S101 or may be performed before or after the step S101. The information acquisition unit 120 outputs the acquired moving-body-related information to the processing unit 130.

Then, the processing unit 130 performs the plurality of processing operations, based on the image acquired by the image acquisition unit 110. At this time, the processing unit 130 controls the execution aspect of each processing, based on the moving-body-related information acquired by the information acquisition unit 120 (step S103).

A series of processing described above may be repeated. That is, the acquisition of the image by the image acquisition unit 110 and the acquisition of the moving-body-related information by the information acquisition unit 120 may be performed a plurality of times in succession, and at each time, the processing unit 130 may perform the plurality of processing operations while controlling the execution aspects.

### (Technical Effect)

Next, a technical effect obtained by the information processing system 10 according to the first example embodiment will be described.

As described in FIG. 1 to FIG. 3, in the information processing system 10 according to the first example embodiment, the plurality of processing operations are performed based on the captured image of the inside or outside of the moving body. The execution aspects of the plurality of processing operations are controlled based on the moving-body-related information. In this way, it is possible to perform the plurality of processing operations based on the captured image, in appropriate execution aspects according to the situation.

### <Second Example Embodiment>

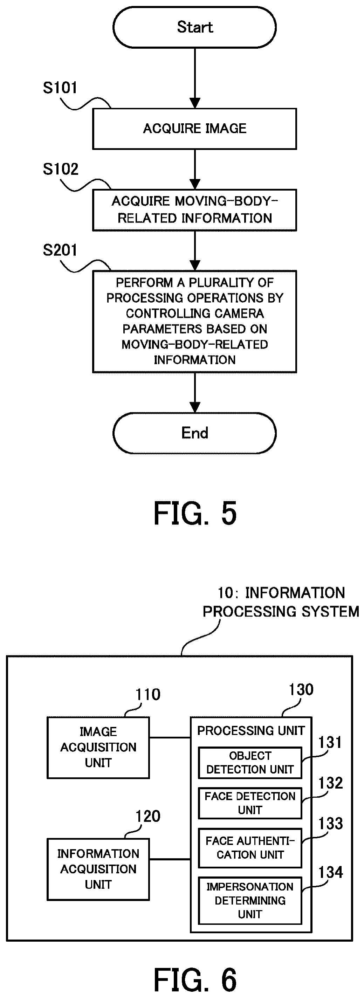

The information processing system 10 according to a second example embodiment will be described with reference to FIG. 4 and FIG. 5. The second example embodiment partially differs from the first example embodiment described above only in its configuration and operation, and may be the same as the first example embodiment in the other parts. For this reason, a part differing from the first example embodiment already described will be described in detail below, and a description of the other overlapping parts will be omitted as appropriate.

### (On-Vehicle Camera)

First, with reference to FIG. 4, a vehicle equipped with the information processing system 10 according to the second example embodiment will be described. FIG. 4 is a side view illustrating a configuration of the vehicle to which the information processing system according to the second example embodiment is applied.

In FIG. 4, the information processing system 10 according to the second example embodiment is configured to be mounted on a vehicle 50. The information processing system 10 may be configured such that all of the components thereof are mounted on the vehicle 50. Alternatively, the information processing system 10 may be configured such that a part of the components are mounted on the vehicle 50 and remaining components are arranged outside the vehicle. In this case, the information processing system 10 may be configured to perform various types of processing while communicating with an outside of the vehicle.

The vehicle 50 equipped with the information processing system 10 according to the second example embodiment includes a first camera 210 and a second camera 220. The first camera 210 and the second camera 220 are cameras that captures images acquired by the image acquisition unit 110.

The first camera 210 is disposed on an upper part of the vehicle 50 and captures an image of the surroundings of the vehicle 50. The first camera 210 may be a camera for detecting an object existing in the vicinity of the vehicle 50, for example. In this case, the processing unit 130 may be configured to perform processing of detecting a human, an obstacle, or the like existing in the vicinity of the vehicle 50, from the image captured by the first camera 210. On the other hand, the second camera 220 is disposed on each door of the vehicle 50 and captures an image of a face of a target approaching each door. The second camera 220 may be a camera for performing authentication processing of a target using the vehicle 50 (e.g., a driver and a passenger). In this case, the processing unit 130 may be configured to perform processing of detecting the face of the target from the image captured by the second camera 220, and to perform processing of performing face authentication processing using the detected face.

Although not illustrated in the figure, a camera may be provided inside the vehicle 50. In this case, the image acquisition unit 110 may be configured to acquire an image captured by the camera provided inside the vehicle 50. The camera provided inside the vehicle 50 may be configured to capture an image of a driver seated in a driver's seat of the vehicle 50, an image of a passenger seated in a front passenger seat or a rear seat of the vehicle 50. Alternatively, the camera provided inside the vehicle 50 may be configured to capture an image of luggage or other items loaded in the vehicle 50.

### (Flow of Operation)

Next, with reference to FIG. 5, a flow of operation of the information processing system 10 according to the second example embodiment will be described. FIG. 5 is a flowchart illustrating the flow of the operation of the information processing system according to the second example embodiment. In FIG. 5, the same steps as those described in FIG. 3 carry the same reference numerals.

As illustrated in FIG. 5, when the operation of the information processing system 10 according to the second example embodiment is started, first, the image acquisition unit 110 acquires the captured image of at least one of the inside or outside of the moving body (step S101). In addition, the information acquisition unit 120 acquires the moving-body-related information (step S102).

Then, the processing unit 130 performs the plurality of processing operations, based on the image acquired by the image acquisition unit 110 (i.e., the images captured by the first camera 210 and the second camera 220). At this time, the processing unit 130 controls the execution aspects of the plurality of processing operations, by controlling camera parameters, based on the moving-body-related information acquired by the information acquisition unit 120 (step S201). For example, the processing unit 130 controls the camera parameters (e.g., exposure, gain, etc.) of the first camera 210 and the second camera 220 to ensure that images suitable for performing the plurality of processing operations are captured.

Alternatively, the processing unit 130 may control imaging ranges of the first camera 210 and the second camera 220 based on the moving-body-related information, so that a subject suitable for the processing to be performed is captured. For example, lens orientation or zoom magnification may be in the first camera 210 and the second camera 220. Alternatively, the processing unit 130 may control an On/Off state of the first camera 210 and the second camera 220 to ensure that the images suitable for the processing to be performed are captured. For example, the processing unit 130 may perform image capture by the first camera 210, while stopping image capture by the second camera 220. The processing unit 130 may also stop the image captured by the first camera 210, while performing the image capture by the second camera 220.

### (Technical Effect)

Next, a technical effect obtained by the information processing system 10 according to the second example embodiment will be described.

As described in FIG. 4 and FIG. 5, in the information processing system 10 according to the second example embodiment, the camera parameters for capturing images are controlled based on the moving-body-related information. In this way, the images suitable for the plurality of processing operations may be captured, thereby enabling the plurality of processing operations to be performed in a more appropriate aspect.

The following example embodiments describes an example in which the information processing system 10 is mounted on the vehicle 50, as described in the second example embodiment.

### <Third Example Embodiment>

The information processing system 10 according to a third example embodiment will be described with reference to FIG. 6 to FIG. 8. The third example embodiment partially differs from the first and second example embodiments described above only in its configuration and operation, and may be the same as the first and second example embodiments in the other parts. For this reason, a part differing from each of the example embodiments described above will be described in detail below, and a description of the other overlapping parts will be omitted as appropriate.

### (Functional Configuration)

First, with reference to FIG. 6, a functional configuration of the information processing system 10 according to the third example embodiment will be described. FIG. 6 is a block diagram illustrating the functional configuration of the information processing system according to the third example embodiment. In FIG. 6, the same components as those described in FIG. 2 carry the same reference numerals.

As illustrated in FIG. 6, the information processing system 10 according to the third example embodiment includes, as components for realizing the functions thereof, the image acquisition unit 110, the information acquisition unit 120, and the processing unit 130. In particular, the processing unit 130 according to the third example embodiment includes an object detection unit 131, a face detection unit 132, a face authentication unit 133, and an impersonation determination unit 134.

The object detection unit 131 is configured to detect an object from the image acquired by the image acquisition unit 110. Since a specific method of detecting the object from the image can adopt existing techniques/technologies as appropriate, a detailed description of the method will be omitted here. The object detection unit 131 may be configured to detect only a moving body (e.g., a human, an animal, etc.), but not a stationary object. The object detection unit 110 may be configured to detect the object by using AI (artificial intelligence). More specifically, the object detection unit 131 may be configured to detect the object by using an object detection model including a learned/trained neural network. In the following, the processing performed by the object face detection unit 131 may be referred to as "object detection processing."

The face detection unit 132 is configured to detect a face of a target (i.e., a target of face authentication described later) from the image acquired by the image acquisition unit 110. Since a specific method of detecting the face from the image can adopt existing techniques/technologies as appropriate, a detailed description of the method will be omitted here. The face detection unit 132 may be configured to detect the face of the human or the animal detected by the object detection unit 110. In this case, the face detection unit 132 may be configured to perform face detection only when an object is detected by the object detection unit 131. The face detection unit 132 may be configured to detect the face by using AI. More specifically, the face detection unit 132 may be configured to detect the face of the target by using a face detection model including a learned/trained neural network. In the following, the processing performed by the face detection unit 132 may be referred to as "face detection processing."

The face authentication unit 133 is configured to perform face authentication by using the image acquired by the image acquisition unit 110. The face authentication unit 133 may perform the face authentication by collating/verifying a facial image registered in advance with the face of the target included in the acquired image. The face authentication unit 133 may perform the face authentication, based on a feature quantity of the face extracted from the facial image, for example. The face authentication unit 133 may perform the face authentication related to the face detected by the face detection unit 132. For example, after the face detection unit 132 detects the face from the image, the face authentication unit 133 may perform the face authentication by using information about an area (a face area) in which the face is detected in the image. The face authentication unit 133 may be configured to perform the face authentication by using AI. More specifically, the face authentication unit 133 may be configured to perform the face authentication by using a face authentication model including a learned/trained neural network. In the following, the processing performed by the face authentication unit 133 may be referred to as "face authentication processing."

The impersonation determination unit 134 is configured to determine whether or not there is impersonation of the target by using the image acquired by the image acquisition unit 110. The "impersonation" here refers to an act of someone impersonating another person by using, for example, a photograph, a video, a 3D mask, or the like. The impersonation determination unit 134 may determine whether or not there is impersonation by determining whether or not the target is a living body. For example, the impersonation determination unit 134 may determine whether or not there is impersonation by requesting the target to perform a predetermined action (e.g., an action of moving a gaze/line of sight or a hand) and determining whether or not the target performs the requested action. Hereinafter, processing performed by the impersonation determination unit 134 may be referred to as "impersonation determination processing."

The processing unit 130 according to the third example embodiment is configured to control the priority of each processing performed by respective one of the object detection unit 131, the face detection unit 132, the face authentication unit 133, and the impersonation determination unit 134 described above. That is, the processing unit 130 is configured to determine which processing is to be performed with what degree of priority, among the object detection processing, the face detection processing, the face authentication processing, and impersonation determination processing. The processing unit 130 may control the priority, for example, by changing allocation of the processor 11 and a memory (i.e., the RAM 12) used by the object detection unit 131, the face detection unit 132, the face authentication unit 133, and the impersonation determination unit 134. Alternatively, the processing unit 130 may control the priority, by performing only a part of the object detection processing, the face detection processing, the face authentication processing, and the impersonation determination processing. That is, the processing unit 130 may perform only the processing with high priority and not perform the processing with low priority.

The processing unit 130 according to the third example embodiment may not necessarily include all of the object detection unit 131, the face detection unit 132, the face authentication unit 133, and the impersonation determination unit 134 described above, but may include at least two of them. For example, the processing unit 130 may include the object detection unit 131 and the face detection unit 132. In this case, the processing unit 130 determines which of the object detection processing and the face detection processing is to be performed with what degree of priority. Alternatively, the processing unit 130 may include the face authentication unit 133 and the impersonation determination unit 134. In this case, the processing unit 130 determines which of the face authentication processing and the impersonation determination processing is to be performed with what degree of priority.

### (Authentication Operation)

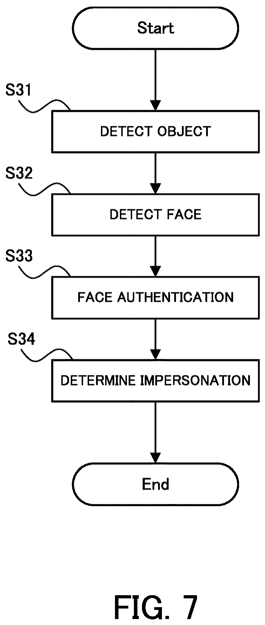

Next, with reference to FIG. 7, a flow of an authentication operation performed by the information processing system 10 according to the third example embodiment (i.e., an operation performed by the object detection unit 131, the face detection unit 132, the face authentication unit 133, and the impersonation determination unit 134) will be described. FIG. 7 is a flowchart illustrating the flow of the authentication operations performed by the information processing system according to the third example embodiment.

As illustrated in FIG. 7, when the authentication operation of the information processing system 10 according to the third example embodiment is started, first, the object detection unit 131 detects the object from the image acquired by the image acquisition unit 110 (step S31). In a case where no object is detected, the subsequent steps may be omitted. In a case where a plurality of objects are detected, the subsequent steps may be performed on each of the plurality of objects.

Then, the face detection unit 132 detects the face of the target from the image acquired by the image acquisition unit 110 (step S32). Then, the face authentication unit 133 performs the face authentication by using the face detected by the face detection unit 132 (step S33). The face authentication unit 133 may output an authentication result after performing the face authentication. For example, the face authentication unit 133 may output information indicating a success in the face authentication, information indicating a failure in the face authentication, information indicating that the face authentication is not be performed normally, or the like.

The face authentication unit 133 may further have a function of performing predetermined processing, based on the authentication result. For example, the face authentication unit 133 may perform processing of releasing a door lock of the vehicle 50 in the case of a success in the face authentication. In addition, the face authentication unit 133 may perform processing of locking the door of the vehicle 50, processing of outputting alert information, or similar processing in the case of a failure in the face authentication. The processing listed here is an example, and various other processing operations may be performed based on the authentication result of the face authentication unit 130.

Then, the impersonation determination unit 134 performs the impersonation determination of the target, based on the image acquired by the image acquisition unit 110 (step S34). The impersonation determination unit 134 may output a determination result after performing the impersonation determination processing. For example, the impersonation determination unit 134 may output information indicating a success in the impersonation determination processing (there is no impersonation of the target), information indicating a failure in the impersonation determination processing (there is impersonation of the target), information indicating that the impersonation determination processing is not performed normally, or the like.

The result of the determination by the impersonation determination unit 134 may be used as information for confirming identity, together with the result of the face authentication by the face authentication unit 133 described above. For example, in a case where it is determined that "there is impersonation" in the impersonation determination processing even in the case of a success in the face authentication processing, identity verification of the target may be failed. In addition, the result of the determination by the impersonation determination unit 134 may be used as a condition for exercising different control from the face authentication processing. For example, the door lock of the vehicle 50 may be released when the face authentication processing by the face authentication unit 133 is successful, and an engine of the vehicle 50 may be started when the impersonation determination unit 134 determines that "there is no impersonation".

Hereinafter, a part or all of the processing operations described in FIG. 7 (i.e., the object detection processing, the face detection processing, the face authentication processing, and the impersonation determination processing) may be referred to as "processing related to the authentication operation."

### (Flow of Operation)

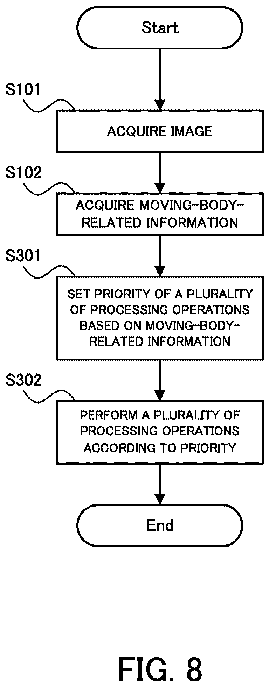

Next, with reference to FIG. 8, a flow of operation of the information processing system 10 according to the third example embodiment will be described. FIG. 8 is a flowchart illustrating the flow of the operation of the information processing system according to the third example embodiment. In FIG. 8, the same steps as those described in FIG. 3 carry the same reference numerals.

As illustrated in FIG. 8, when the operation of the information processing system 10 according to the third example embodiment is started, first, the image acquisition unit 110 acquires the captured image of at least one of the inside or outside of the moving body (step S101). In addition, the information acquisition unit 120 acquires the moving-body-related information (step S102).

Then, the processing unit 130 sets the priority of the plurality of processing operations to be performed, based on the moving-body-related information acquired by the information acquisition unit 120 (step S301). That is, the processing unit 130 sets the priority of each of the object detection processing, the face detection processing, the face authentication processing, and the impersonation determination processing.

Then, the processing unit 130 performs the plurality of processing operations, based on the image acquired by the image acquisition unit 110. At this time, the processing unit 130 performs each processing, based on the priority set in step S301 (step S302). By this, the execution aspects of the plurality of processing operations to be performed by the processing unit 130 are controlled based on the moving-body-related information.

### (Technical Effect)

Next, a technical effect obtained by the information processing system 10 according to the third example embodiment will be described.

As described in FIG. 6 to FIG. 8, in the information processing system 10 according to the third example embodiment, the priority of the object detection processing, the face detection processing, the face authentication processing, and the impersonation determination processing is changed based on the moving-body-related information. In this way, it is possible to change the priority of each processing according to the situation and to perform the processing related to the authentication operation in a more appropriate aspect.

### <Fourth Example Embodiment>

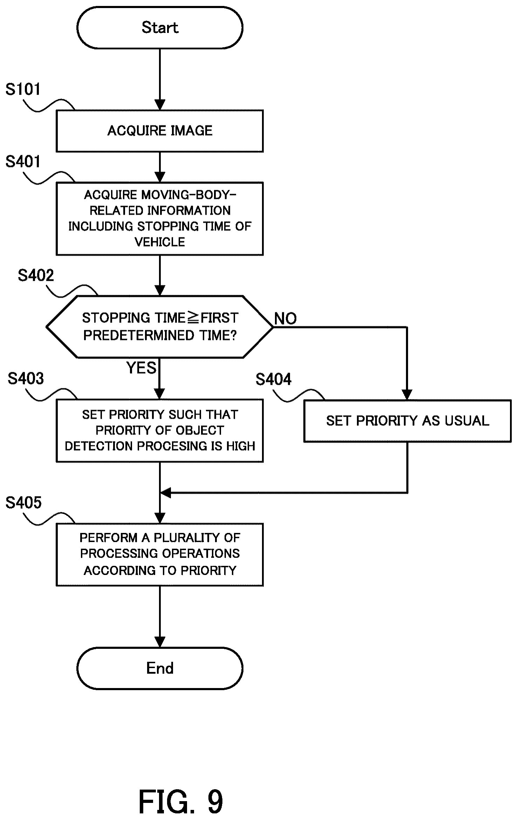

The information processing system 10 according to a fourth example embodiment will be described with reference to FIG. 9. The fourth example embodiment partially differs from the first to third example embodiments described above only in its operation, and may be the same as the first to third example embodiments in the other parts. For this reason, a part differing from each of the example embodiments described above will be described in detail below, and a description of the other overlapping parts will be omitted as appropriate.

### (Flow of Operation)

First, with reference to FIG. 9, a flow of operation of the information processing system 10 according to the fourth example embodiment will be described. FIG. 9 is a flowchart illustrating the flow of the operation of the information processing system according to the fourth example embodiment. In FIG. 9, the same steps as those described in FIG. 2 carry the same reference numerals

As illustrated in FIG. 9, when the operation of the information processing system 10 according to the fourth example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires a stopping/parking time of the vehicle 50 (i.e., an elapsed time from when the vehicle 50 is stopped) as the moving-body-related information (step S401). The moving-body-related information may include information other than the stopping time of the vehicle 50.

Then, the processing unit 130 determines whether or not the stopping time of the vehicle 50 is greater than a first predetermined time, based on the acquired moving-body-related information (step S402). The "first predetermined time" here is a threshold for determining whether or not the stopping time of the vehicle 50 is sufficiently long, and may be set to a value allowing a determination that the target leaves the vehicle 50 to another location.

When the stopping time of the vehicle 50 is greater than the first predetermined time (the step S402: YES), the processing unit 130 gives higher priority to the object detection processing than the priority of the face detection processing, the face authentication processing, and the impersonation determination processing (step S403). The processing unit 130 may increase the priority of the object detection processing, or may reduce the priority of the processing other than the object detection processing, so that the priority of the object detection processing is relatively increased.

On the other hand, when the stopping time of the vehicle 50 is less than the first predetermined time (the step S402: NO), the priority of each processing is set to a usual value (e.g., am initial value set in advance) (step S404). That is, unlike in the step S403, the priority of the object detection processing is not increased.

Then, the processing unit 130 performs the plurality of processing operations with the set priority (step S405). That is, the processing unit 130 prioritizes and performs the object detection processing over the other processing when the priority of the object detection processing is high in the step S403, and the processing unit 130 performs each processing without prioritizing the object detection processing when the priority is set to the normal value in step S404.

### (Technical Effect)

Next, a technical effect obtained by the information processing system 10 according to the fourth example embodiment will be described.

As described in FIG. 9, in the information processing system 10 according to the fourth example embodiment, the priority of the object detection processing is changed according to the stopping time of the vehicle 50. Specifically, when the vehicle 50 is stopped for a long time, the priority of the object detection processing is set high. In this way, it is possible to efficiently detect the object around the vehicle 50 when the vehicle 50 is stopped for a long time. For example, in a situation where the target having left the vehicle 50 returns to the vehicle 50, the returning target may be appropriately detected as the object. As a result, it is possible to detect the target without missing it and to appropriately transition to the processing after the object is detected (i.e., the face detection processing, the face authentication processing, and the impersonation determination processing). After the target is detected by the object detection processing, the priority of the object detection processing, which is increased so far, may be reduced (i.e., it may be returned to usual priority).

### <Fifth Example Embodiment>

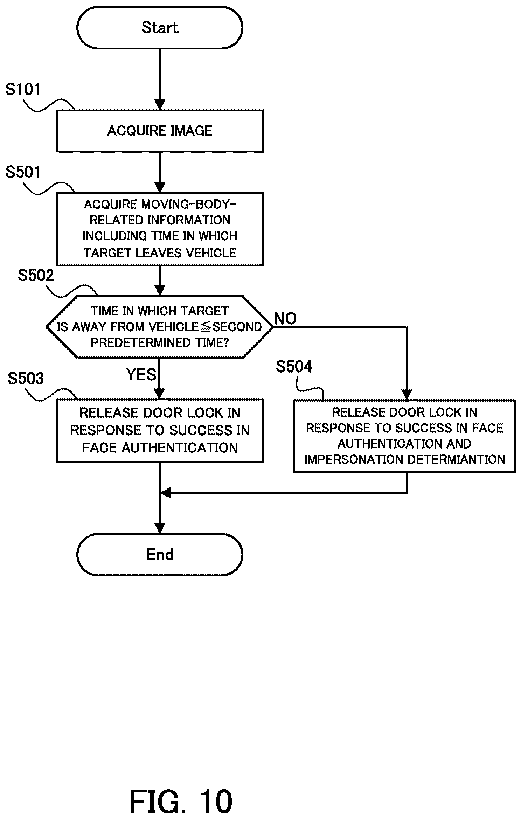

The information processing system 10 according to a fifth example embodiment will be described with reference to FIG. 10. The fifth example embodiment partially differs from the first to fourth example embodiments described above only in its operation, and may be the same as the first to fourth example embodiments in the other parts. For this reason, a part differing from each of the example embodiments described above will be described in detail below, and a description of the other overlapping parts will be omitted as appropriate.

### (Flow of Operation)

First, with reference to FIG. 10, a flow of operation of the information processing system 10 according to the fifth example embodiment will be described. FIG. 10 is a flowchart illustrating the flow of the operation of the information processing system according to the fifth example embodiment. In FIG. 10, the same steps as those described in FIG. 3 carry the same reference numerals. In the fifth example embodiment, the face authentication processing and the impersonation determination processing are performed as processing for releasing the door lock of the vehicle 50.

As illustrated in FIG. 10, when the operation of the information processing system 10 according to the fifth example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires a time in which the target is away from the vehicle 50 (i.e., an elapsed time from when the target gets off the vehicle) as the moving-body-related information (step S501). The moving-body-related information may include information other than the time in which the target is away from the vehicle 50.

Then, the processing unit 130 determines whether or not the time in which the target is away from the vehicle 50 is less than or equal to a second predetermined time, based on the acquired moving-body-related information (step S502). The "second predetermined time" here is a threshold for determining whether the time in which the target is away from the vehicle 50 is very short, and may be set to a value allowing a determination that the target having got off the vehicle immediately returns to the vehicle 50 (e.g., the target immediately returns after noticing that he/she has left something behind).

When the time in which the target is away from the vehicle 50 is less than or equal to the second predetermined time (the step S502: YES), the processing unit 130 releases the door lock on the condition that the face authentication processing is successful (step S503). That is, the processing unit 130 releases the door lock of the vehicle 50 in a case where it is confirmed by the face authentication processing that the target is an occupant of the vehicle 50.

On the other hand, when the time in which the target is away from the vehicle 50 is not less than or equal to the second predetermined time (the step S502: NO), the processing unit 130 releases the door lock on the condition that both the face authentication processing and the impersonation determination processing are successful (step S504). That is, the processing unit 130 releases the door lock of the vehicle 50 when it is confirmed by the face authentication processing that the target is an occupant of the vehicle 50 and it is confirmed by the impersonation determination that the target is not impersonating someone else.

### (Technical Effect)

Next, a technical effect obtained by the information processing system 10 according to the fifth example embodiment will be described.

As described in FIG. 10, in the information processing system 10 according to the fifth example embodiment, a door unlocking condition (i.e., a condition imposed on identity authentication) is changed depending on the time in which the target is away from the vehicle 50. In this way, in a case where the target returns to the vehicle 50 immediately after leaving it, door unlocking processing is performed under a relatively lenient condition, thereby reducing a burden on the target and a processing load. In addition, in a case where the target returns to the vehicle 50 after leaving it for a while, the door unlocking processing is performed under a relatively strict condition, thereby preventing the door lock from being released by someone else.

### <Sixth Example Embodiment>

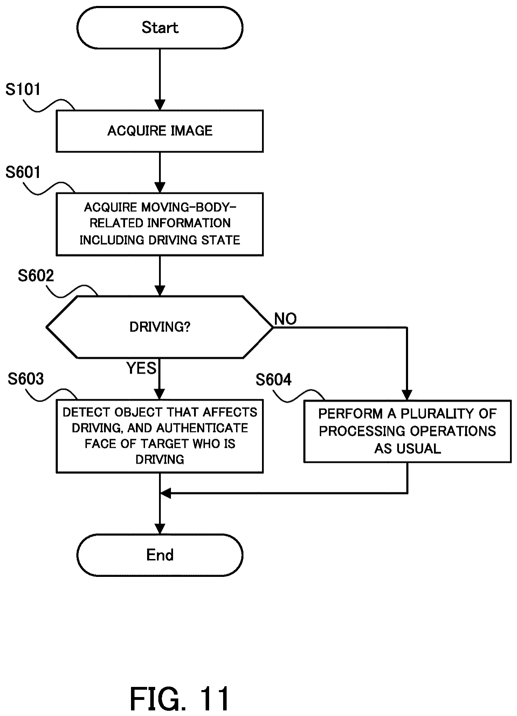

The information processing system 10 according to a sixth example embodiment will be described with reference to FIG. 11. The sixth example embodiment partially differs from the first to fifth example embodiments described above only in its operation, and may be the same as the first to fifth example embodiments in the other parts. For this reason, a part differing from each of the example embodiments described above will be described in detail below, and a description of the other overlapping parts will be omitted as appropriate.

### (Flow of Operation)

First, with reference to FIG. 11, a flow of operation of the information processing system 10 according to the sixth example embodiment will be described. FIG. 11 is a flowchart illustrating the flow of the operation of the information processing system according to the sixth example embodiment. In FIG. 11, the same steps as those described in FIG. 3 carry the same reference numerals.

As illustrated in FIG. 11, when the operation of the information processing system 10 according to the sixth example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires information indicating whether or not the target is driving the vehicle 50, as the moving-body-related information (step S601). The moving-body-related information may include information other than the information indicating whether or not the target is driving the vehicle 50.

Then, the processing unit 130 determines whether or not the target is driving the vehicle 50, based on the acquired moving-body-related information (step S602). When the vehicle 50 is being driven (the step S602: YES), the processing unit 130 performs the object detection processing as processing of detecting an object (e.g., an obstacle) that affects driving, and performs the face authentication processing as processing of authenticating the driver's face (step S603).

On the other hand, when the vehicle 50 is not being driven (the step S602: NO), the processing unit 130 performs the plurality of processing operations as usual (step S603). For example, the processing unit 130 may perform the processing of releasing the door lock, based on the results of the face authentication processing and the impersonation determination processing, as described in the fifth example embodiment.

### (Technical Effect)

Next, a technical effect obtained by the information processing system 10 according to the sixth example embodiment will be described.

As described in FIG. 11, in the information processing system 10 according to the sixth example embodiment, in a case where the target is driving the vehicle 50, the processing of detecting the object that affects driving and the processing of authenticating the driver's face are performed. In this way, it is possible to appropriately perform processing of assisting the target in driving and processing that is performed after authenticating the target who is driving. In a case where the vehicle 50 is being driven, it is unlikely to be in a situation that requires processing of recognizing an object outside the vehicle 50 and releasing the door lock, as described in the fifth example embodiment. Therefore, during driving, high priority is given to processing operations related to the driving of the vehicle 50 and the inside of the vehicle 50, and low priority is given to unnecessary processing such as releasing the door lock. This makes it possible to perform the plurality of processing operations, more appropriately.

### <Seventh Example Embodiment>

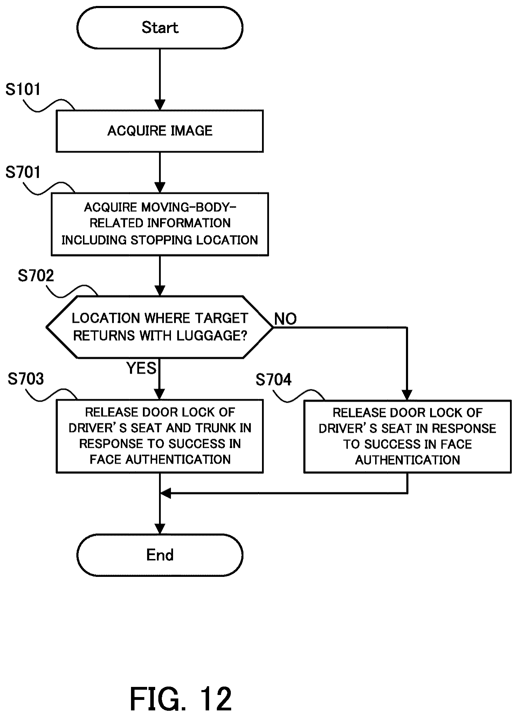

The information processing system 10 according to a seventh example embodiment will be described with reference to FIG. 12. The seventh example embodiment partially differs from the first to sixth example embodiments described above only in its operation, and may be the same as the first to sixth example embodiments in the other parts. For this reason, a part differing from each of the example embodiments described above will be described in detail below, and a description of the other overlapping parts will be omitted as appropriate.

### (Flow of Operation)

First, with reference to FIG. 12, a flow of operation of the information processing system 10 according to the seventh example embodiment will be described. FIG. 12 is a flowchart illustrating the flow of the operation of the information processing system according to the seventh example embodiment. In FIG. 12, the same steps as those described in FIG. 3 carry the same reference numerals.

As illustrated in FIG. 12, when the operation of the information processing system 10 according to the seventh example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires a location where the vehicle 50 is stopped/parked, as the moving-body-related information (step S701). The location where the vehicle 50 is stopped may include latitude/longitude information, map information, information about surrounding facilities or environments, or the like. The moving-body-related information may include information other than the location where the vehicle 50 is stopped.

Then, the processing unit 130 determines whether the location where the vehicle 50 is stopped is a location where the target is predicted/expected to return to the vehicle 50 with luggage (hereinafter referred to as an "predicted luggage loading location"), based on the acquired moving-body-related information (step S702). An example of the predicted luggage loading location is a store parking lot. In a case where the vehicle 50 is stopped/parked in a store parking lot, it is highly likely that the target buys things at a store and returns to the vehicle 50 with the things/luggage.

When the location where the vehicle 50 is stopped is the predicted luggage loading location (the step 702: YES), the processing unit 130 releases a door lock of the driver's seat and a door lock of a trunk on the condition that the face authentication of the target is successful (step S703). That is, the processing unit 130 releases the door lock of the trunk where the target loads luggage, in addition to the door lock of the driver's seat where the target gets in. In a case where the target is predicted to load luggage onto the rear seat, the processing unit 130 may release a door lock of the rear seat of the vehicle 50. Where the target loads luggage may be predicted, for example, from the target's past behavior pattern or the like.

On the other hand, when the location where the vehicle 50 is stopped is not the predicted luggage loading location (the step S702: NO), the processing unit 130 releases only the door lock of the driver's seat on the condition that the face authentication of the target is successful (step S703). That is, it is determined that the target does not return with luggage, and the processing unit 130 does not release the door lock of the trunk where luggage is loaded or other seats.

### (Technical Effect)

Next, a technical effect obtained by the information processing system 10 according to the seventh example embodiment will be described.

As described in FIG. 12, in the information processing system 10 according to the seventh example embodiment, in a case where the stopping/parking location of the vehicle 50 is the location where the target is predicted to return with luggage, the door lock corresponding to a location where the luggage is to be placed is released. In this manner, it is possible to easily load the luggage brought by the target, into the vehicle 50. This effect is more pronounced in a situation where the target's hands are full of luggage and it is hard to perform an operation with the hands.

### <Eighth Example Embodiment>

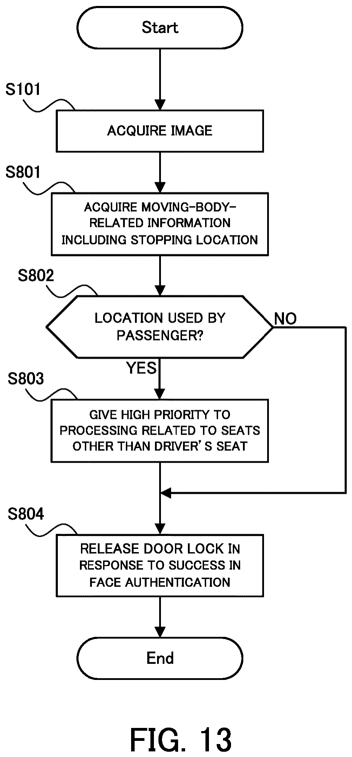

The information processing system 10 according to an eighth example embodiment will be described with reference to FIG. 13. The eighth example embodiment partially differs from the first to seventh example embodiments described above only in its operation, and may be the same as the first to seventh example embodiments in the other parts. For this reason, a part differing from each of the example embodiments described above will be described in detail below, and a description of the other overlapping parts will be omitted as appropriate.

### (Flow of Operation)

First, with reference to FIG. 13, a flow of operation of the information processing system 10 according to the eighth example embodiment will be described. FIG. 13 is a flowchart illustrating the flow of the operation of the information processing system according to the eighth example embodiment. In FIG. 13, the same steps as those described in FIG. 3 carry the same reference numerals.

As illustrated in FIG. 13, when the operation of the information processing system 10 according to the eighth example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires a location where the vehicle 50 is stopped/parked, as the moving-body-related information (step S801). The location where the vehicle 50 is stopped may include latitude/longitude information, map information, information about surrounding facilities or environments, or the like. The moving-body-related information may include information other than the location where the vehicle 50 is stopped.

Then, the processing unit 130 determines whether or not the location where the vehicle 50 is stopped is a location used by a passenger of the vehicle 50 (i.e., an occupant other than the driver), based on the acquired moving-body-related information (step S802). Note that information about the passenger of the vehicle 50 and information about the location used by the passenger may be registered in advance. For example, an owner of the vehicle 50 may register his/her "child" as the passenger. In this case, "school" may be registered as the location used by the passenger.

When the location where the vehicle 50 is stopped is the location used by the passenger (step 802: YES), the processing unit 130 gives high priority to the processing related to the authentication operation, for seats other than the driver's seat (e.g., the front passenger seat and the rear seat) (step S803). That is, the processing unit 130 gives high priority to the processing related to the authentication operation, for the seat(s) used by the passenger(s).

When the location where the vehicle 50 is stopped is not the location used by the passenger (the step 802: NO), the processing unit 130 omits the step S803 described above. In this case, high priority is not given to the processing related to the authentication operation, for the seats other than the driver's seat.

Then, the processing unit 130 performs the processing related to the authentication operation with the set priority, and releases the door lock of the door corresponding to a success in the authentication (step S804). For example, the processing unit 130 may turn off the second camera 220 (see FIG. 4) disposed on the door of the driver's seat, while turning on the second camera 220 disposed on the door of the rear seat, to perform the processing related to the authentication operation.

### (Technical Effect)

Next, a technical effect obtained by the information processing system 10 according to the eighth example embodiment will be described.

As described in FIG. 13, in the information processing system 10 according to the eighth example embodiment, in a case where the stopping location of the vehicle 50 is the location used by the passenger, the priority of the processing of releasing the door locks of the seats other than the driver's seat is changed to be high. In this way, it is possible to appropriately perform the processing related to the authentication operation on the passenger of the vehicle 50 and to release the door lock of the seat where the passenger gets in.

### <Ninth Example Embodiment>

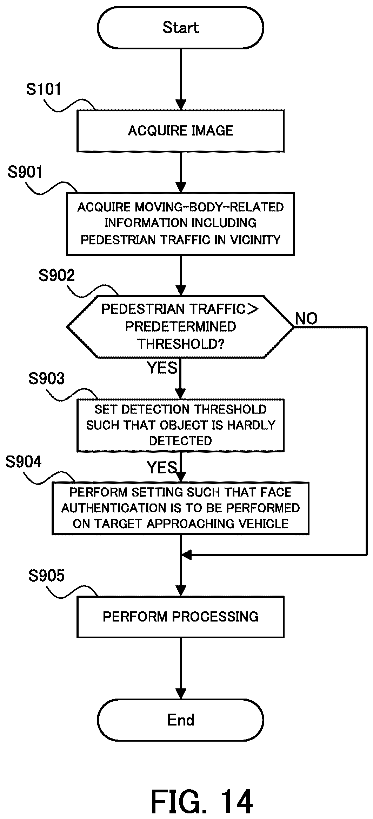

The information processing system 10 according to a ninth example embodiment will be described with reference to FIG. 14. The ninth example embodiment partially differs from the first to eighth example embodiments described above only in its operation, and may be the same as the first to eighth example embodiments in the other parts. For this reason, a part differing from each of the example embodiments described above will be described in detail below, and a description of the other overlapping parts will be omitted as appropriate.

### (Flow of Operation)

First, with reference to FIG. 14, a flow of operation of the information processing system 10 according to the ninth example embodiment will be described. FIG. 14 is a flowchart illustrating the flow of the operation of the information processing system according to the ninth example embodiment. In FIG. 14, the same steps as those described in FIG. 3 carry the same reference numerals.

As illustrated in FIG. 14, when the operation of the information processing system 10 according to the ninth example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires information about pedestrian traffic in the vicinity of the location where the vehicle 50 is stopped, as the moving-body-related information (step S901). The information about the pedestrian traffic may be acquired, for example, from map information. For example, in a case where the location where the vehicle 50 is stopped is a busy area, information indicating that there is heavy pedestrian traffic may be acquired. In addition, the information about the pedestrian traffic may be acquired in consideration of time of day. For example, the information indicating that there is heavy pedestrian traffic may be acquired near a school during the morning (school hours). The moving-body-related information may include information other than information about the pedestrian traffic.

Then, the processing unit 130 determines whether or not the pedestrian traffic in the location where the vehicle 50 is stopped is greater than a predetermined threshold, based on the acquired moving-body-related information (step S902). The "predetermined threshold" here is a threshold for determining that there is heavy pedestrian traffic (i.e., there are many detection targets) to the extent that a load of the object detection processing is determined to be extremely large.

When the pedestrian traffic is greater than the predetermined threshold (the step 902: YES), the processing unit 130 sets a detection threshold such that an object is hardly detected in the object detection processing (step S903). In addition, the processing unit 130 performs setting such that the face authentication processing is to be performed on a target approaching the vehicle (step S904). In other words, the processing unit 130 performs setting such that the face authentication processing is not to be performed on a target merely passing by the vehicle 50 or a target moving away from the vehicle 50, among the detected objects.

When the pedestrian traffic is less than the predetermined threshold (the step 902: NO), the processing unit 130 omits the steps S903 and S904 described above. In this case, the detection threshold in the object detection processing is not changed, and the face authentication processing is set to be performed even on a target other than the target approaching the vehicle.

Then, the processing unit 130 performs the processing related to the authentication operation according to the set content (step S905). For example, when the pedestrian traffic is greater than the predetermined threshold and the steps S903 and S904 are performed, the object detection processing is performed in a state in which an object is hardly detected. In addition, the face authentication processing is performed on the target approaching the vehicle 50.

### (Technical Effect)

Next, a technical effect obtained by the information processing system 10 according to the ninth example embodiment will be described.

As described in FIG. 14, in the information processing system 10 according to the ninth example embodiment, in a case where there is heavy pedestrian traffic in the location where the vehicle 50 is stopped, an object is set to be hardly detected in the object detection processing, and the target of the face authentication processing is limited to a person approaching the vehicle 50. In this way, it is possible to prevent an unnecessarily large number of targets from being detected and to prevent the face authentication processing from being performed on a large number of targets, thereby preventing an increase in a processing load. By reducing the processing load, for example, power consumption may be reduced, but when there is sufficient power (e.g., when an electric vehicle (EV) is being charged, or in similar cases), it is not necessary to change the execution aspect described above. That is, in a case where it is determined to be unnecessary to reduce the processing load, even when there is heavy pedestrian traffic, an object may be detected at a normal threshold and the authentication processing may be performed on a target other than the target approaching the vehicle 50.

### <Tenth Example Embodiment>

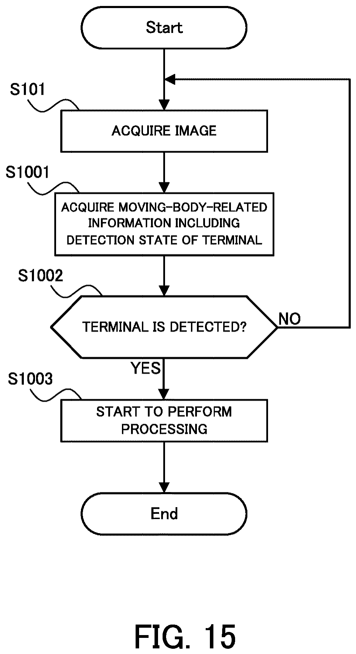

The information processing system 10 according to a tenth example embodiment will be described with reference to FIG. 15. The tenth example embodiment partially differs from the first to ninth example embodiments described above only in its operation, and may be the same as the first to ninth example embodiments in the other parts. For this reason, a part differing from each of the example embodiments described above will be described in detail below, and a description of the other overlapping parts will be omitted as appropriate.

### (Flow of Operation)

First, with reference to FIG. 15, a flow of operation of the information processing system 10 according to the tenth example embodiment will be described. FIG. 15 is a flowchart illustrating the flow of the operation of the information processing system according to the tenth example embodiment. In FIG. 15, the same steps as those described in FIG. 3 carry the same reference numerals.

As illustrated in FIG. 15, when the operation of the information processing system 10 according to the tenth example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires a detection state of a terminal carried by the passenger of the vehicle 50, as the moving-body-related information (step S1001). The terminal carried by the passenger may be, for example, a terminal that is communicable such as a smartphone and a smartwatch. The terminal carried by the passenger may be detected by using Bluetooth, for example. The terminal carried by the passenger may be detected by using a method other than Bluetooth. For example, the information acquisition unit 120 may measure a distance between the vehicle 50 and the terminal carried by the passenger in real time and may detect the terminal when the distance between them is within a predetermined distance.

Then, the processing unit 130 determines whether or not the terminal carried by the passenger is detected based on the acquired moving-body-related information (step S1002). When the terminal carried by the passenger is detected (the step 1002: YES), the processing unit 130 starts the processing related to the authentication operation (step S1003). For example, the processing unit 130 starts to capture an image to be used for the object detection processing.

On the other hand, when the terminal carried by the passenger is not detected (the step 1002: NO), the processing unit 130 does not start the processing related to the authentication operation. For example, the processing unit 130 continues stopping the capture of the image to be used for the object detection processing. In this case, the processing may be repeated from the step S101.

### (Technical Effect)

Next, a technical effect obtained by the information processing system 10 according to the tenth example embodiment will be described.

As described in FIG. 15, in the information processing system 10 according to the tenth example embodiment, in a case where the terminal carried by the passenger of the vehicle 50 is detected, the processing related to the authentication operation is performed. In this way, in a case where the terminal carried by the passenger is not detected (e.g., when the passenger is far away from the vehicle 50), the processing related to the authentication operation is not performed, thereby enabling unnecessary processing to be prevented.

### <11th Example Embodiment>

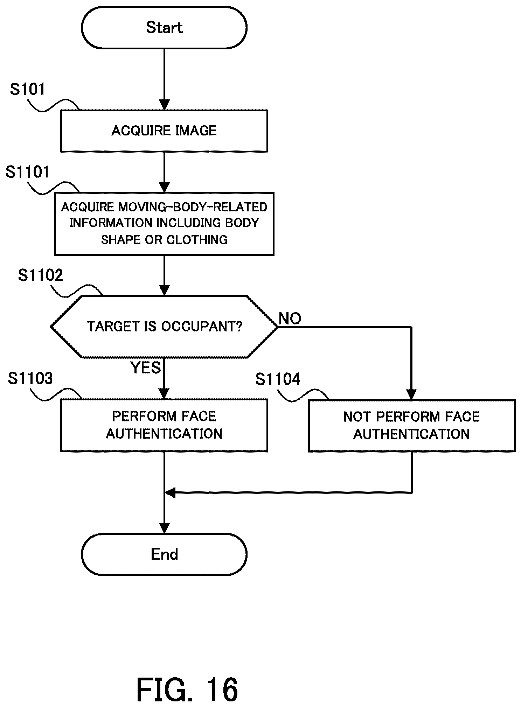

The information processing system 10 according to an 11th example embodiment will be described with reference to FIG. 16. The 11th example embodiment partially differs from the first to tenth example embodiments described above only in its operation, and may be the same as the first to tenth example embodiments in the other parts. For this reason, a part differing from each of the example embodiments described above will be described in detail below, and a description of the other overlapping parts will be omitted as appropriate.

### (Flow of Operation)

First, with reference to FIG. 16, a flow of operation of the information processing system 10 according to the 11th example embodiment will be described. FIG. 16 is a flowchart illustrating the flow of the operation of the information processing system according to the 11th example embodiment. In FIG. 16, the same steps as those described in FIG. 3 carry the same reference numerals.

As illustrated in FIG. 16, when the operation of the information processing system 10 according to the 11th example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires information about a body type or clothing of the target, as the moving-body-related information (step S1101). The information about the body type or clothing of the target may be acquired from the image of the target. The information about the body type of the target may include, for example, information about a predicted height and weight, or information indicating a type, such as "thin," "average," and "stocky." The information about the clothing of the target may include, for example, information indicating a color of clothing, or information indicating a type of clothing (e.g., shirt, hoodie, skirt, coat, etc.). The moving-body-related information may include information other than the information about the body type and clothing of the target.

Then, the processing unit 130 determines whether or not the target is an occupant of the vehicle 50, based on the acquired moving-body-related information (step S1102). The processing unit 130 may determine whether or not the target is an occupant of the vehicle 50, for example, by comparing the body shape or clothing of an occupant stored in advance with the body shape or clothing of the target indicated by the moving-body-related information.

When the target is determined to be the occupant (the step 1102: YES), the processing unit 130 performs the face authentication processing on the target (step S1103). In this case, since it is determined that the target is likely to be the occupant based on the body shape or clothing, a threshold for the face authentication may be lowered (i.e., the authentication may be made easier).

On the other hand, when the target is not determined to be the occupant (the step S1102: NO), the processing unit 130 does not perform the face authentication processing on the target. That is, even if the target attempts to perform the face authentication processing, the face authentication processing is not performed (or is treated as a failure in the authentication). In this instance, in a case where the target approaches the vehicle 50 and makes suspicious movements, not only is the face authentication processing not performed, but also alert information may be outputted.

### (Technical Effect)

Next, a technical effect obtained by the information processing system 10 according to the 11th example embodiment will be described.

As described in FIG. 16, in the information processing system 10 according to the 11th example embodiment, it is determined whether or not the target is an occupant of the vehicle 50 based on the clothing or body shape of the target, and when the target is determined to be the occupant, the face authentication processing is performed. In this way, it is possible to prevent the face authentication processing from being performed on a target who is clearly different from the occupant (e.g., a target with significantly different clothing or body shape from that of the occupant). This makes it possible to prevent unnecessary processing from being performed and to reduce a chance to mistakenly authenticate another person as the occupant through the face authentication.

### <12th Example Embodiment>

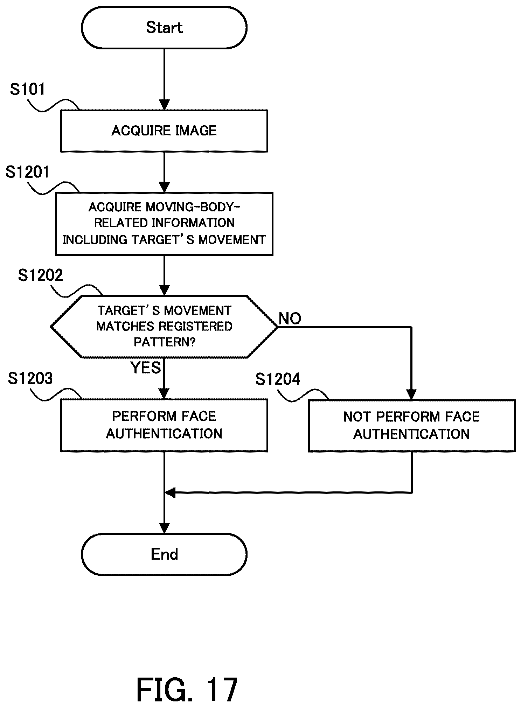

The information processing system 10 according to a 12th example embodiment will be described with reference to FIG. 17. The 12th example embodiment partially differs from the first to 11th example embodiments described above only in its operation, and may be the same as the first to 11th example embodiments in the other parts. For this reason, a part differing from each of the example embodiments described above will be described in detail below, and a description of the other overlapping parts will be omitted as appropriate.

### (Flow of Operation)

First, with reference to FIG. 17, a flow of operation of the information processing system 10 according to the 12th example embodiment will be described. FIG. 17 is a flowchart illustrating the flow of the operation of the information processing system according to the 12th example embodiment. In FIG. 17, the same steps as those described in FIG. 3 carry the same reference numerals.

As illustrated in FIG. 17, when the operation of the information processing system 10 according to the 12th example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires information about the movement of the target, as the moving-body-related information (step S1201). The movement of the target may include not only gestures made by the target, but also a movement of a gaze/line of sight of the target, a movement of the face of the target, and the like. The information about the movement of the target may be acquired from images (video) of the target. The moving-body-related information may include information other than the information about the movement of the target.

Then, the processing unit 130 determines whether or not the movement of the target matches a predetermined registered pattern, based on the acquired moving-body-related information (step S1202). The "registered pattern" here refers to a movement stored in advance as a start condition for the face authentication processing. Examples of the registered pattern may include an action of directing a gaze/line of sight toward a door, an action of moving the face up, down, left, or right, and the like. The registered pattern may be a combination of a plurality of actions. Alternatively, the registered pattern may require the completion of an action within a predetermined time (e.g., turning right and left within three seconds).

When the movement of the target matches the registered pattern (the step 1202: YES), the processing unit 130 determines that the target is likely to be an occupant of the vehicle 50 (knows the registered pattern) and performs the face authentication processing (step S1203).

On the other hand, when the movement of the target does not match the registered pattern (the step S1202: NO), the processing unit 130 determines that the target is not likely to be an occupant of the vehicle 50 (does not know the registered pattern) and does not perform the face authentication processing (step S1204).

The above example is an example of changing the execution aspect (possibility of execution) of the face authentication process was given, but the execution aspect of the object detection processing may be also changed in addition to or instead of the face authentication processing. For example, the processing unit 130 may detect an object whose movement matches the registered pattern and may not detect an object whose movement does not match the registered pattern.

### (Technical Effect)

Next, a technical effect obtained by the information processing system 10 according to the 12th example embodiment will be described.

As described in FIG. 17, in the information processing system 10 according to the 12th example embodiment, it is determined whether or not to perform the face authentication processing, based on the movement of the target. In this way, the target subjected to the face authentication processing may be limited by the movement. This makes it possible to prevent the face authentication processing from being unnecessarily performed and to reduce a chance to mistakenly authenticate another person as the occupant through the face authentication.

### <13th Example Embodiment>

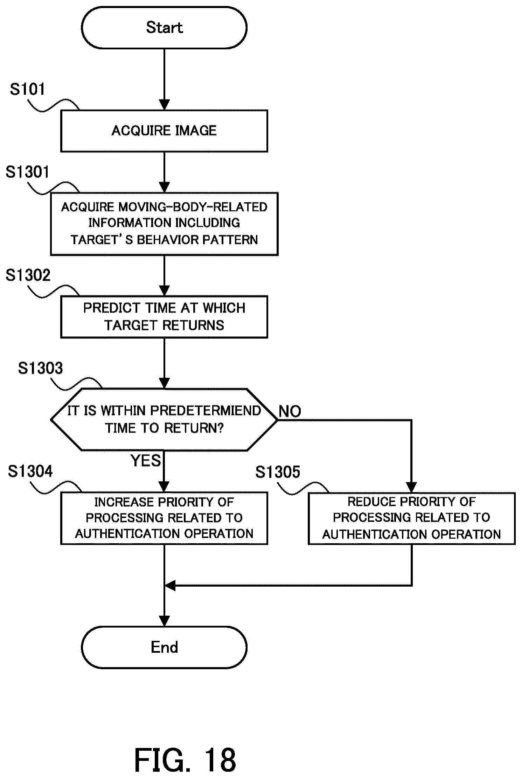

The information processing system 10 according to a 13th example embodiment will be described with reference to FIG. 18. The 13th example embodiment partially differs from the first to 12th example embodiments described above only in its operation, and may be the same as the first to 12th example embodiments in the other parts. For this reason, a part differing from each of the example embodiments described above will be described in detail below, and a description of the other overlapping parts will be omitted as appropriate.

### (Flow of Operation)

First, with reference to FIG. 18, a flow of operation of the information processing system 10 according to the 13th example embodiment will be described. FIG. 18 is a flowchart illustrating the flow of the operation of the information processing system according to the 13th example embodiment. In FIG. 18, the same steps as those described in FIG. 3 carry the same reference numerals. In addition, the processing in FIG. 18 is assumed to be performed while the target is away from the vehicle 50.

As illustrated in FIG. 18, when the operation of the information processing system 10 according to the 13th example embodiment is started, first, the image acquisition unit 110 acquires the captured image of at least one of the inside or outside of the moving body (step S101).

Then, the information acquisition unit 120 acquires the moving-body-related information. At this time, the information acquisition unit 120 acquires information about the target's behavior pattern, as the moving-body-related information (step S1301). The target's behavior pattern may be information in which information indicating the target's behavior is associated with date and time information. For example, information about the target's behavior pattern may include information indicating that the target uses the vehicle 50 from 8:00 a.m. on weekdays. Alternatively, the target's behavior pattern may be information in which the information indicating the target's behavior is associated with location information. For example, the information about the target's behavior pattern may include information indicating that the target returns in about one hour when the target parks the vehicle 50 at a predetermined store. The information about the target's behavior pattern may be learned as needed, by storing the target's past behaviors. The moving-body-related information may include information other than the information about the target's behavior pattern.

Then, the processing unit 130 predicts a time at which the target returns to the vehicle 50, based on the acquired moving-body-related information (step S1302). That is, the processing unit 130 predicts the time at which the target returns to the vehicle 50, based on the target's behavior pattern. Then, the processing unit 130 determines whether or not a time remaining until the target returns is within a predetermined time (step S1303). The "predetermined time" here is a threshold set to determine timing of changing the priority of the processing related to the authentication operation. The predetermined time may be set to a relatively short time (e.g., about 1 to 3 minutes) when it can be determined that prediction accuracy of the time at which the target returns is high. On the other hand, when it can be determined that the prediction accuracy of the time at which the target returns is low, the predetermined time may be set to a longer time (e.g., about 30 minutes to 1 hour).

When it is determined that it is within the predetermined time for the target to return (the step 1303: YES), the processing unit 130 determines that the target is likely to return soon, and increases the priority of the processing related to the authentication operation (step S1304). For example, the processing unit 130 turns on a camera that captures an image of the target, or increases resources allocated to the processing related to the authentication operation.

On the other hand, when it is determined that it is longer than the predetermined time for the target to return (the step 1303: NO), the processing unit 130 determines that the target is unlikely to return for a while, and reduces the priority of the processing related to the authentication operation (step S1305). For example, the processing unit 130 turns off the camera that captures an image of the target, or reduces the resources allocated to the processing related to the authentication operation.

### (Technical Effect)

Next, a technical effect obtained by the information processing system 10 according to the 13th example embodiment will be described.

As described in FIG. 18, in the information processing system 10 according to the 13th example embodiment, the time at which the target returns to the vehicle 50 (i.e., the time at which the target gets in the vehicle 50) is predicted by using the behavior pattern of the occupant of the vehicle 50. Then, until a predetermined time before the predicted time, the priority of the processing related to the authentication operation is set relatively low. In this way, it is possible to prevent the processing related to the authentication operations from being performed during a period of time when the target is unlikely to use the vehicle 50, or to prevent the resources allocated to the processing related to the authentication operation from being unnecessarily increased. Thus, it is possible to efficiently reduce/control an increase in the processing load.

### <14th Example Embodiment>

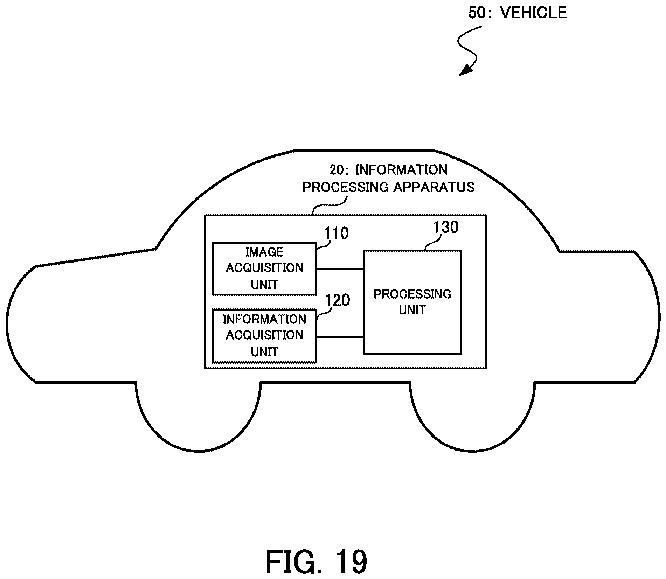

An information processing apparatus according to a 14th example embodiment will be described with reference to FIG. 19. The information processing apparatus according to the 14th example embodiment is configured as a single apparatus including the information processing system 10 described in the first to 13th example embodiments, and may be the same as the information processing system 10 described above in its configuration and operation. For this reason, a part differing from each of the example embodiments described above will be described in detail below, and a description of the other overlapping parts will be omitted as appropriate.

### (Functional Configuration)

First, with reference to FIG. 19, a functional configuration of the information processing apparatus according to the 14th example embodiment will be described. FIG. 19 is a block diagram illustrating the functional configuration of the information processing apparatus according to the 14th example embodiment. In FIG. 19, the same components as those illustrated in FIG. 2 carry the same reference numerals.

As illustrated in FIG. 19, an information processing apparatus 20 according to the 14th example embodiment is configured as an apparatus mounted on the vehicle 50. The information processing apparatus 20 includes, as components for realizing the functions thereof, the image acquisition unit 110, the information acquisition unit 120, and the processing unit 130. That is, the information processing apparatus 20 according to the 14th example embodiment includes the same components as those of the information processing system 10 according to the first example embodiment (see FIG. 2). The information processing apparatus 20 may be configured by, for example, an electronic control unit (ECU) provided in the vehicle 50.

### (Technical Effect)

Next, a technical effect obtained by the information processing apparatus 20 according to the 14th example embodiment will be described.

In the information processing apparatus 20 according to the 14th example embodiment, the plurality of processing operations are performed based on the captured image of the inside or outside of the vehicle 50. Then, the execution aspects of the plurality of processing operations are controlled based on the moving-body-related information. In this way, it is possible to perform the plurality of processing operations to be performed in the vehicle 50, in an appropriate execution aspect according to the situation.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal. The program may be provided to a user in a form of SaaS (Software as a Service), for example.

### <Supplementary Notes>

The example embodiments described above may be further described as, but not limited to, the following Supplementary Notes below.

### (Supplementary Note 1)

An information processing system according to Supplementary Note 1 is an information processing system including: an image acquisition unit that acquires a captured image of at least one of an inside or outside of a moving body; a processing unit that performs a plurality of different processing operations, based on the image; and an information acquisition unit that acquires moving-body-related information indicating a state related to the moving body, wherein the processing unit controls an execution aspect related to each of the plurality of processing operations, based on the moving-body-related information.

### (Supplementary Note 2)

An information processing system according to Supplementary Note 2 is the information processing system according to Supplementary Note 1, wherein the moving body includes at least one camera that captures the image, and the processing unit controls a parameter of the at least one camera, based on the moving-body-related information.

### (Supplementary Note 3)

An information processing system according to Supplementary Note 3 is the information processing system according to Supplementary Note 1 or 2, wherein the plurality of processing operations include at least two of object detection processing of detecting an object existing in a vicinity of the moving body, face detection processing of detecting a face of a target existing inside or in the vicinity of the moving body, face authentication processing of performing authentication by using the face of the target, and impersonation determination processing of determining impersonation of the target, and the processing unit changes priority of the object detection processing, the face detection processing, the face authentication processing, and the impersonation determination processing, based on the moving-body-related information.

### (Supplementary Note 4)

An information processing system according to Supplementary Note 4 is the information processing system according to Supplementary Note 3, wherein the information acquisition unit acquires a stopping time of the moving body, as the moving-body-related information, and the processing unit gives higher priority to the object detection processing than priority of the face detection processing, the face authentication processing, and the impersonation determination processing, in a case where the moving body is stopped for a first predetermined time or longer.

### (Supplementary Note 5)

An information processing system according to Supplementary Note 5 is the information processing system according to Supplementary Note 3 or 4, wherein the information acquisition unit acquires a time in which the target is away from the moving body, as the moving-body-related information, and the processing unit releases a door lock of the moving body on a condition that the face authentication processing is successful in a case where the time in which the target is away is less than or equal to a second predetermined time, and releases a door lock of the moving body on a condition that both the face authentication processing and the impersonation determination processing are successful in a case where the time in which the target is away is greater than or equal to the second predetermined time.

### (Supplementary Note 6)

An information processing system according to Supplementary Note 6 is the information processing system according to any one of Supplementary Notes 3 to 5, wherein the information acquisition unit acquires information indicating whether or not the target is driving the moving body, as the moving-body-related information, and the processing unit performs the object detection processing as processing of detecting an object that affects driving in a case where the target is driving the moving body, and performs the face authentication processing as processing of authenticating the face of the target who is driving the moving body.

### (Supplementary Note 7)

An information processing system according to Supplementary Note 7 is the information processing system according to any one of Supplementary Notes 3 to 6, wherein the information acquisition unit acquires a location where the moving body is stopped, as the moving-body-related information, and the processing unit releases a door lock corresponding to a seat where the target is seated, and a door lock corresponding to a location where the target places luggage, on a condition that the face authentication processing is successful, in a case where the location where the moving body is stopped is a location where the target is predicted to return to the moving body with the luggage.

### (Supplementary Note 8)

An information processing system according to Supplementary Note 8 is the information processing system according to any one of Supplementary Notes 3 to 7, wherein the information acquisition unit acquires a location where the moving body is stopped, as the moving-body-related information, and the processing unit increases the priority of the object detection processing, the face detection processing, the face authentication processing, and the impersonation determination processing to release a door lock corresponding to seats other than a driver's seat of the moving body, in a case where the location where the moving body is stopped is a location used by a passenger other than a driver of the moving body.

### (Supplementary Note 9)

An information processing system according to Supplementary Note 9 is the information processing system according to any one of Supplementary Notes 3 to 8, wherein the information acquisition unit acquires information about pedestrian traffic in a vicinity of a location where the moving body is stopped, as the moving-body-related information, and the processing unit changes a threshold such that an object is hardly detected in the object detection processing, and performs the face authentication processing on an object approaching the moving body as the target, in a case where the pedestrian traffic in the vicinity of the location where the moving body is stopped is greater than a predetermined threshold.

### (Supplementary Note 10)

An information processing system according to Supplementary Note 10 is the information processing system according to any one of Supplementary Notes 3 to 9, wherein the information acquisition unit acquires information about whether or not a terminal carried by an occupant of the moving body is detected, as the moving-body-related information, and the processing unit performs the object detection processing, the face detection processing, the face authentication processing, and the impersonation determination processing, in a case where the terminal is detected.

### (Supplementary Note 11)

An information processing system according to Supplementary Note 11 is the information processing system according to any one of Supplementary Notes 3 to 10, wherein the information acquisition unit acquires at least one of a body type or clothing of the target existing in the vicinity of the moving body, as the moving-body-related information, and the processing unit performs the face authentication processing in response to a determination that the target is an occupant of the moving body, based on at least one of the body type or clothing.

### (Supplementary Note 12)

An information processing system according to Supplementary Note 12 is the information processing system according to any one of Supplementary Notes 3 to 11, wherein the information acquisition unit acquires information about a movement of the target existing in the vicinity of the moving body, as the moving-body-related information, and the processing unit determines whether or not to perform the face authentication processing, based on the movement of the target.

### (Supplementary Note 13)

An information processing system according to Supplementary Note 13 is the information processing system according to any one of Supplementary Notes 3 to 12, wherein the information acquisition unit acquires information about a behavior pattern of an occupant of the moving body, as the moving-body-related information, and the processing unit predicts a time at which the occupant returns to the moving body, from the behavior pattern, and reduces the priority of the object detection processing, the face detection processing, the face authentication process, and the impersonation determination processing, until a predetermined time before the predicted time.

### (Supplementary Note 14)

An information processing apparatus according to Supplementary Note 14 is an information processing apparatus mounted on a moving body, the information processing apparatus including: an image acquisition unit that acquires a captured image of at least one of an inside or outside of the moving body; a processing unit that performs a plurality of different processing operations, based on the image; and an information acquisition unit that acquires moving-body-related information indicating a state related to the moving body, wherein the processing unit controls an execution aspect related to each of the plurality of processing operations, based on the moving-body-related information.

### (Supplementary Note 15)

An information processing method according to Supplementary Note 15 is an information processing method that is executed by at least one computer, the information processing method including: acquiring a captured image of at least one of an inside or outside of a moving body; performing a plurality of different processing operations, based on the image; and acquiring moving-body-related information indicating a state related to the moving body, wherein an execution aspect related to each of the plurality of processing operations is controlled based on the moving-body-related information.

### (Supplementary Note 16)

A recording medium according to Supplementary Note 16 is a recording medium on which a computer program that allows at least one computer to execute an information processing method is recorded, the information processing method including: acquiring a captured image of at least one of an inside or outside of a moving body; performing a plurality of different processing operations, based on the image; and acquiring moving-body-related information indicating a state related to the moving body, wherein an execution aspect related to each of the plurality of processing operations is controlled based on the moving-body-related information.

### (Supplementary Note 17)

A computer program according to Supplementary Note 17 is a computer program that allows at least one computer to execute an information processing method, the information processing method including: acquiring a captured image of at least one of an inside or outside of a moving body; performing a plurality of different processing operations, based on the image; and acquiring moving-body-related information indicating a state related to the moving body, wherein an execution aspect related to each of the plurality of processing operations is controlled based on the moving-body-related information.

The present disclosure is allowed to be changed, if desired, without departing from the essence or spirit of this disclosure which can be read from the claims and the entire specification. An information processing system, an information processing apparatus, an information processing method, and a recording medium with such changes are also intended to be within the technical scope of the present disclosure.

### Description of Reference Codes

10 Information processing system
11 Processor
20 Information processing apparatus
50 Vehicle
110 Image acquisition unit
120 Information acquisition unit
130 Processing unit
131 Object detection unit
132 Face detection unit
133 Face authentication unit
134 Impersonation determination unit
210 First camera
220 Second camera

## Claims

1. An information processing system comprising:
an image acquisition unit that acquires a captured image of at least one of an inside or outside of a moving body;
a processing unit that performs a plurality of different processing operations, based on the image; and
an information acquisition unit that acquires moving-body-related information indicating a state related to the moving body, wherein
the processing unit controls an execution aspect related to each of the plurality of processing operations, based on the moving-body-related information.

2. The information processing system according to claim 1, wherein
the moving body includes at least one camera that captures the image, and
the processing unit controls a parameter of the at least one camera, based on the moving-body-related information.

3. The information processing system according to claim 1 or 2, wherein
the plurality of processing operations include at least two of object detection processing of detecting an object existing in a vicinity of the moving body, face detection processing of detecting a face of a target existing inside or in the vicinity of the moving body, face authentication processing of performing authentication by using the face of the target, and impersonation determination processing of determining impersonation of the target, and
the processing unit changes priority of the object detection processing, the face detection processing, the face authentication processing, and the impersonation determination processing, based on the moving-body-related information.

4. The information processing system according to claim 3, wherein
the information acquisition unit acquires a stopping time of the moving body, as the moving-body-related information, and
the processing unit gives higher priority to the object detection processing than priority of the face detection processing, the face authentication processing, and the impersonation determination processing, in a case where the moving body is stopped for a first predetermined time or longer.

5. The information processing system according to claim 3, wherein
the information acquisition unit acquires a time in which the target is away from the moving body, as the moving-body-related information, and
the processing unit releases a door lock of the moving body on a condition that the face authentication processing is successful in a case where the time in which the target is away is less than or equal to a second predetermined time, and releases a door lock of the moving body on a condition that both the face authentication processing and the impersonation determination processing are successful in a case where the time in which the target is away is greater than or equal to the second predetermined time.

6. The information processing system according to claim 3, wherein
the information acquisition unit acquires information indicating whether or not the target is driving the moving body, as the moving-body-related information, and
the processing unit performs the object detection processing as processing of detecting an object that affects driving in a case where the target is driving the moving body, and performs the face authentication processing as processing of authenticating the face of the target who is driving the moving body.

7. The information processing system according to claim 3, wherein
the information acquisition unit acquires a location where the moving body is stopped, as the moving-body-related information, and
the processing unit releases a door lock corresponding to a seat where the target is seated, and a door lock corresponding to a location where the target places luggage, on a condition that the face authentication processing is successful, in a case where the location where the moving body is stopped is a location where the target is predicted to return to the moving body with the luggage.

8. The information processing system according to claim 3, wherein
the information acquisition unit acquires a location where the moving body is stopped, as the moving-body-related information, and
the processing unit increases the priority of the object detection processing, the face detection processing, the face authentication processing, and the impersonation determination processing to release a door lock corresponding to seats other than a driver's seat of the moving body, in a case where the location where the moving body is stopped is a location used by a passenger other than a driver of the moving body.

9. The information processing system according to claim 3, wherein
the information acquisition unit acquires information about pedestrian traffic in a vicinity of a location where the moving body is stopped, as the moving-body-related information, and
the processing unit changes a threshold such that an object is hardly detected in the object detection processing, and performs the face authentication processing on an object approaching the moving body as the target, in a case where the pedestrian traffic in the vicinity of the location where the moving body is stopped is greater than a predetermined threshold.

10. The information processing system according to claim 3, wherein
the information acquisition unit acquires information about whether or not a terminal carried by an occupant of the moving body is detected, as the moving-body-related information,
and the processing unit performs the object detection processing, the face detection processing, the face authentication processing, and the impersonation determination processing, in a case where the terminal is detected.

11. The information processing system according to claim 3, wherein
the information acquisition unit acquires at least one of a body type or clothing of the target existing in the vicinity of the moving body, as the moving-body-related information, and
the processing unit performs the face authentication processing in response to a determination that the target is an occupant of the moving body, based on at least one of the body type or clothing.

12. The information processing system according to claim 3, wherein
the information acquisition unit acquires information about a movement of the target existing in the vicinity of the moving body, as the moving-body-related information, and
the processing unit determines whether or not to perform the face authentication processing, based on the movement of the target.

13. The information processing system according to claim 3, wherein
the information acquisition unit acquires information about a behavior pattern of an occupant of the moving body, as the moving-body-related information, and
the processing unit predicts a time at which the occupant returns to the moving body, from the behavior pattern, and reduces the priority of the object detection processing, the face detection processing, the face authentication process, and the impersonation determination processing, until a predetermined time before the predicted time.

14. An information processing apparatus mounted on a moving body, the information processing apparatus comprising:
an image acquisition unit that acquires a captured image of at least one of an inside or outside of the moving body;
a processing unit that performs a plurality of different processing operations, based on the image; and
an information acquisition unit that acquires moving-body-related information indicating a state related to the moving body, wherein
the processing unit controls an execution aspect related to each of the plurality of processing operations, based on the moving-body-related information.

15. An information processing method that is executed by at least one computer, the information processing method comprising:
acquiring a captured image of at least one of an inside or outside of a moving body;
performing a plurality of different processing operations, based on the image; and
acquiring moving-body-related information indicating a state related to the moving body, wherein
an execution aspect related to each of the plurality of processing operations is controlled based on the moving-body-related information.

16. A recording medium on which a computer program that allows at least one computer to execute an information processing method is recorded, the information processing method including:
acquiring a captured image of at least one of an inside or outside of a moving body;
performing a plurality of different processing operations, based on the image; and
acquiring moving-body-related information indicating a state related to the moving body, wherein
an execution aspect related to each of the plurality of processing operations is controlled based on the moving-body-related information.
